# FASCICULE DE BREVET EUROPEEN

(11) **EP 0 497 691 B1**
(45) Date de publication et mention de la délivrance du brevet: **27.03.1996**
(21) Numéro de dépôt: 92400224.9
(22) Date de dépôt: 29.01.1992
(51) Int. Cl.: C09K 17/00, C04B 28/02, E02D 3/12

(54) **Produit d'injection à base de ciment destiné à être injecté dans un sol ou dans une paroi pour l'obturer, notamment pour consolider un terrain**
Injektionsprodukt auf Zementbasis zum Injizieren in einen Boden oder eine Wand zwecks Ausfüllen, insbesondere zum Bodenverfestigen
Cement-based injection product for injection into a ground or a wall for filling up, especially for ground consolidation

(30) Priorité: 29.01.1991 FR 9100974
(43) Date de publication de la demande: 05.08.1992
(73) Titulaire: BOUYGUES, F-78061 Saint-Quentin en Yvelines Cedex (FR)
(72) Inventeur: Dachet, Jacqueline, F-75010 Paris (FR)
(74) Mandataire: Martin, Jean-Jacques

(56) Documents cités:
- FR-A- 1 327 749
- FR-A- 2 325 772

## Description

L'invention concerne un produit d'injection à base de ciment destiné à être injecté dans un sol ou une paroi pour l'obturer, notamment dans les interstices d'un sol naturel, en particulier un sol sablonneux à majorité de grains moyens et fins, pour consolider le terrain.

Il est connu de consolider un tel terrain en y injectant un produit constitué par un gel de silicate accompagné d'un réactif organique.

Cette technique présente notamment l'inconvénient que certaines bactéries présentes dans le sol sont susceptibles d'agir sur le réactif organique et de donner naissance à des dégagements de H2S.

Pour éviter cet inconvénient, on a proposé de remplacer le réactif organique par du ciment mais la pénétration du ciment dans les interstices entre les grains de sable, notamment lorsque les grains ont en majeure partie une grosseur inférieure à 1,5 mm (grains moyens) ou à fortiori inférieure à 0,2 mm (grains fins), se fait mal même si l'on choisit des ciments à grains fins, en raison notamment de la tendance des grains de ciment à s'agglomérer (floculation), ce qui grossit la taille des particules, tendance qui croît lorsque la grosseur des grains de ciment diminue.

L'utilisation d'un fluidifiant, comme ceux couramment utilisés dans la préparation des bétons, peut améliorer la situation mais cette amélioration reste néanmoins insuffisante.

Un but de l'invention est de fournir un produit d'injection à base de ciment, stable et fluide pendant la durée de l'injection et ayant une bonne diffusion à travers le sable fin.

Un autre but de l'invention est de fournir un produit d'injection tel que ci-dessus et qui puisse être préparé sur chantier à partir de matières du commerce, sans nécessiter des phases de préparation en usine ou en laboratoire.

Le produit d'injection de l'invention est tel que défini dans la revendication 1. Dans une réalisation préférée, cette suspension, très fluide et stable contient, par m³ de suspension, au moins 500 litres d'eau, au moins 50 kg de ciment et au moins 10 kg de particules fines.

Encore mieux, cette suspension contient, par m³ de suspension, au moins 750 litres d'eau et de 75 à 300 kg de ciment.

De préférence, les particules fines sont des particules de craie.

De préférence, la suspension contient de 30 à 150 kg de particules fines de craie par m³ de suspension.

Sans vouloir être lié par une explication particulière, on pense que la pénétrabilité de ce produit serait due au fait que les particules fines s'intercaleraient entre les grains de ciment sans réagir avec lui pendant la durée de l'injection, laquelle est habituellement de l'ordre de quelques dizaines de minutes.

Les particules fines ont de préférence des particules micronisées ayant une grosseur de grain en majeure partie inférieure à 20 microns, la grosseur de grain des particules étant de préférence choisie pour être inférieure au diamètre moyen des pores du terrain.

Les particules micronisées de craie constituent une charge très intéressante car elles sont disponibles dans le commerce à l'état de suspension dans l'eau où les particules ont une grosseur de grains inférieure à 10 microns et elles conviennent pour des terrains sablonneux réputés difficiles à stabiliser, comme les sables de Fontainebleau qui ont une grosseur de grain de l'ordre de 0,3 mm.

On a déjà proposé de combiner de la craie et du ciment (brevet français 1 327 749) mais dans une combinaison différente de celle de la présente invention et pour une application différente (fabrication d'agglomérés).

On a aussi proposé un produit d'injection contenant du ciment et de la craie (publication FR-A-2 325 772, cf. préambule de la revendication 1 annexée) mais selon une composition très différente de la présente invention par la granulométrie des constituants et l'état du produit obtenu qui constitue une pâte.

L'utilisation d'un ciment ultra-fin (c'est-à-dire de grosseur de grain inférieure à 15 microns) est essentielle dans la composition de l'invention.

Ainsi, une suspension de ciment ordinaire et de bentonite, cette dernière ayant des grains de l'ordre de 2 microns, dosée à raison de 200 kg de ciment et 35 kg de bentonite, ne peut convenir que pour la consolidation d'un sable grossier de grosseur de grains supérieure à 1,5 mm.

L'utilisation de ciment ultra-fin permet d'espérer obtenir une solution satisfaisante. Toutefois, même si une grosseur de grains de ciment inférieure à 15 microns améliore la pénétrabilité, cette dernière est encore très insuffisante, et une suspension stable préparée à partir de bentonite de grosseur inférieure à 2 microns et d'un ciment de grosseur inférieure à 15 microns, donne lieu à une floculation des grains qui nuit à sa pénétration. Une composition dosée à 30 kg de bentonite et 200 kg de ciment aura une diffusion très faible dans un sable fin, nécessitant un nombre important de forages pour son introduction dans le terrain.

Par contre, un dosage à raison de 150 kg de ciment ultra fin auquel il est ajouté 75 l de suspension de craie à 75% de matières sèches diffuse parfaitement dans un sable type alluvions de Seine.

L'invention n'est cependant pas limitée à l'utilisation de la craie et il est également préconisé de choisir les particules fines parmi les particules de talc, d'argile (par exemple kaolin) et de silice, utilisables à l'état de poudre ou de suspension.

Les dispersants utilisables pour éviter l'agglomération des particules fines avec les grains de ciment sont choisis parmi les adjuvants anti-agglomérants habituellement utilisés dans les compositions en béton, notamment les dérivés de l'acide acrylique ou méthacrylique, les phosphates simples ou complexes et, de préférence, les fluidifiants du béton de type polymère sulfoné naphtalène ou mélamine sulfoné, etc.

On peut également ajouter d'autres adjuvants à la suspension de ciment et de poudre micronisée, par exemple un sol de silice. Les sols de silice sont des produits du commerce. De préférence, on incorpore 3 à 75 litres de sol de silice par m³ de suspension.

On décrira ci-après des exemples non limitatifs de suspensions de ciment conformes à l'invention. Les essais sont réalisés dans des colonnes standards d'une longueur de 1,10 m qui sont remplies de sable de grosseur de grain inférieure à 1,6 mm (Essais N° 1 et 2) ou inférieure à 0,314 mm (Essais N° 3 et 4). On injecte dans la colonne la suspension de ciment avec un débit constant et l'on mesure la pression d'injection (laquelle est d'autant plus faible que la pénétrabilité est plus grande), la longueur de pénétration du ciment dans la colonne et la résistance moyenne à 7 jours.

### Essai N° 1 (Témoin).-

On injecte une suspension de ciment ultra-fin dosé à 250 kg de ciment/m³ de suspension, contenant un dispersant de type polymère sulfoné. Les résultats sont les suivants :

| | |
|---|---|
| Pression d'injection | 0,2 MPa |
| Longueur consolidée | 1,10 m |
| Résistance moyenne à 7 j | 1,4 MPa |

### Essai N° 2.-

On injecte une suspension de ciment ultra-fin dosé à 174 kg/m³ de ciment et contenant 250 l/m³ de craie ainsi que le dispersant de l'essai N° 1.

Les résultats sont les suivants :

| | |
|---|---|
| Pression d'injection | 0,01 MPa |
| Longueur consolidée | 1,10 m |
| Résistance moyenne à 7 j | 1,4 MPa |

On constate que la pression d'injection a très fortement diminué, ce qui signifie que la pénétrabilité de cette solution est très supérieure à celle de la suspension de l'essai N° 1.

On effectue d'autres essais avec un sable plus fin d'une grosseur de grain inférieure à 0,315 mm et en utilisant un ciment ultra-fin dosé à 100 kg/m³ dans la suspension injectée, cette suspension contenant le même dispersant (essai témoin N° 3) et contenant de plus 30 l/m³ de craie micronisée (essai N° 4).

Les résultats sont les suivants :

### Essai N° 3.- (Témoin)

| | |
|---|---|
| Pression d'injection | 0,1 MPa |
| Longueur consolidée | 0,92 m blocage observé |
| Résistance moyenne à 7 j | 0,86 MPa |

### Essai N° 4.-

| | |
|---|---|
| Pression d'injection | 0,1 MPa |
| Longueur consolidée | 1,10 m |
| Résistance moyenne à 7 j | 1,1 MPa |

On constate que la longueur consolidée est limitée dans le cas de la suspension témoin alors qu'elle atteint le maximum mesurable dans le cas d'addition d'une suspension de craie ce qui signifie une plus grande pénétration.

Bien entendu, le produit de l'invention qui convient pour consolider des terrains difficiles à pénétrer convient également à fortiori pour consolider les autres terrains.

## Revendications

1. Produit d'injection à base de ciment, de particules telles que la craie et d'eau, additionné d'adjuvants, destiné à être injecté dans un sol ou une paroi pour en obturer les interstices, notamment dans un terrain sablonneux à grains moyens ou fins pour le consolider, caractérisé en ce qu'il est constitué par une suspension dans l'eau de ciment ultra-fin ayant une grosseur de grain inférieure à 15 microns, des particules fines de grosseur inférieure à 30 microns d'au moins une matière choisie dans le groupe constitué par la craie, lekaolin, la silice et le talc, et contenant un dispersant choisi parmi les adjuvants habituels du béton, éventuellement d'autres adjuvants, par exemple un sol de silice.

2. Produit d'injection selon la revendication 1, caractérisé en ce que la suspension contient, par m³ de suspension, au moins 500 litres d'eau, au moins 50 kg de ciment et au moins 10 kg de particules fines.

3. Produit d'injection selon la revendication 2, caractérisé en ce que la suspension contient, par m³ de suspension, au moins 750 litres d'eau et de 75 à 300 kg de ciment.

4. Produit d'injection selon l'une des revendications 1 à 3, caractérisé en ce que les particules fines ont, en majeure partie, une grosseur inférieure à 20 microns.

5. Produit d'injection selon l'une des revendications 1 à 4, caractérisé en ce qu'il contient des particules fines de craie.

6. Produit d'injection selon la revendication 5, caractérisé en ce que la suspension contient de 30 à 150 kg de particules fines de craie par m³ de suspension.

7. Produit d'injection selon l'une des revendications 1 à 6, caractérisé en ce qu'il comprend un mélange d'une suspension dans l'eau de ciment et d'une suspension dans l'eau de craie, à raison de 15 a 500 litres de suspension de craie par m³ de suspension de ciment.

8. Produit selon l'une des revendications 5 à 7, caractérisé en ce que la suspension comprend également un sol de silice.

9. Produit selon la revendication 8, caractérisé en ce que la suspension contient de 3 à 75 litres de sol de silice par m³ de suspension.

10. Produit d'injection selon l'une des revendications 1 à 9, caractérisé en ce que le dispersant est choisi parmi les fluidifiants du béton.

## Patentansprüche

1. Injektionsprodukt auf der Basis von Zementteilchen, wie Kreide und Wasser, und mit Zusatzstoffen versetzt, das in einen Boden oder in eine Wand zum Ausfüllen der Zwischenräume, insbesondere in einen sandigen Boden mittlerer oder feiner Körnung zu dessen Verfestigung, injiziert wird, dadurch gekennzeichnet, daß es aus einer Suspension von ultrafeinem Zement in Wasser besteht, wobei der ultrafeine Zement eine untere Korngröße von 15 µm hat, die feinen Teilchen eine untere Größe von 30 µm aufweisen und aus mindestens einem Stoff bestehen, der aus der Gruppe gewählt ist, welche Kreide, Kaolin, Silizium und Talk umfaßt und ein Dispersionsmittel enthält, das aus gewöhnlichen Betonzusätzen gewählt ist sowie gegebenenfalls andere Zusätze, z.B. Kieselerde, aufweist.

2. Injektionsprodukt nach Anspruch 1, dadurch gekennzeichnet, daß die Suspension pro m³ Suspension mindestens 500 l Wasser, mindestens 50 kg Zement und mindestens 10 kg feine Teilchen enthält.

3. Injektionsprodukt nach Anspruch 2, dadurch gekennzeichnet, daß die Suspension pro m³ der Suspension mindestens 750 l Wasser und 75 bis 300 kg Zement enthält.

4. Injektionsprodukt nach einem der Ansprüche 1 bis 3, dadurch gekennzeichnet, daß die feinen Teilchen im wesentlichen eine untere Größe von 20 µm enthalten.

5. Injektionsprodukt nach einem der Ansprüche 1 bis 4, dadurch gekennzeichnet, daß es feine Kreideteilchen enthält.

6. Injektionsprodukt nach Anspruch 5, dadurch gekennzeichnet, daß die Suspension 30 bis 150 kg feine Kreideteilchen pro m³ Suspension enthält.

7. Injektionsprodukt nach einem der Ansprüche 1 bis 6, dadurch gekennzeichnet, daß es eine Mischung einer Suspension von Zement in Wasser und eine Suspension von Kreide in Wasser umfaßt, wobei das Mischungsverhältnis 15 bis 500 l Kreidesuspension pro m³ Zementsuspension beträgt.

8. Erzeugnis nach einem der Ansprüche 5 bis 7, dadurch gekennzeichnet, daß die Suspension auch Kieselerde umfaßt.

9. Erzeugnis nach Anspruch 8, dadurch gekennzeichnet, daß die Suspension 3 bis 75 l Kieselerde pro m³ Suspension enthält.

10. Injektionsprodukt nach einem der Ansprüche 1 bis 9, dadurch gekennzeichnet, daß das Dispergiermittel aus den Betonverflüssigern ausgewählt ist.

## Claims

1. An injection substance based on cement, on particles such as chalk, and on water, together with additives, for injection into ground or into a wall to close interstices therein, in particular into sandy terrain having medium or fine grains for the purpose of consolidating the terrain, the substance being characterized in that it is constituted by a suspension in water of ultrafine cement having a grain size of less than 15 microns, fine particles of a size that is less than 30 microns of at least one material selected from the group constituted by chalk, kaolin, silica, and talc, and containing a dispersing agent selected from the usual concrete additives, optionally with other additives, e.g. a silica sol.

2. An injection substance according to claim 1, characterized in that the suspension contains, per cubic meter (m³) of suspension, at least 500 liters of water, at least 50 kg of cement, and at least 10 kg of fine particles.

3. An injection substance according to claim 2, characterized in that the suspension contains, per m³ of suspension, at least 750 liters of water and 75 kg to 300 kg of cement.

4. An injection substance according to any one of claims 1 to 3, characterized in that the fine particles are, for the most part, smaller than 20 microns in size.

5. An injection substance according to any one of claims 1 to 4, characterized in that it contains fine particles of chalk.

6. An injection substance according to claim 5, characterized in that the suspension contains 30 kg to 150 kg of fine particles of chalk per m³ of suspension.

7. An injection substance according to any one of claims 1 to 6, characterized in that it comprises a mixture of a suspension in water of cement and of a suspension in water of chalk, comprising 15 liters to 500 liters of chalk suspension per m³ of cement suspension.

8. A substance according to any one of claims 5 to 7, characterized in that the suspension also includes a silica sol.

9. A substance according to claim 8, characterized in that the suspension contains 3 liters to 75 liters of silica sol per m³ of suspension.

10. An injection substance according to any one of claims 1 to 9, characterized in that the dispersant is selected from concrete fluidifiers.
